# EUROPEAN PATENT SPECIFICATION

(11) **EP 2 293 223 B1**
(45) Date of publication and mention of the grant of the patent: **24.08.2016**
(21) Application number: 09010814.3
(22) Date of filing: 24.08.2009
(51) Int. Cl.: G06K 9/00

(54) **Vision system and method for a motor vehicle**
Sichtsystem und -verfahren für ein Kraftfahrzeug
Système de vision et procédé pour véhicule à moteur

(43) Date of publication of application: 09.03.2011
(73) Proprietor: Autoliv Development AB, 447 83 Vårgårda (SE)
(72) Inventor: Hedberg, Ognjan, 58222 Linköping (SE); Johansson, Stefan, 58235 Linköping (SE); Mathevon, Vincent, 59195 Motala (SE)
(74) Representative: Müller Verweyen

(56) References cited:
- EP-A- 1 873 716
- EP-A- 2 079 053
- WO-A-2009/027090
- US-A- 5 638 116
- CHANG S-L ET AL: "Video Stabilization for a Camcorder Mounted on a Moving Vehicle" IEEE TRANSACTIONS ON VEHICULAR TECHNOLOGY, IEEE SERVICE CENTER, PISCATAWAY, NJ, US, vol. 53, no. 6, 1 November 2004 (2004-11-01), pages 1636-1648, XP011122454 ISSN: 0018-9545

## Description

The invention relates to a vision system for a motor vehicle, comprising at least one imaging device adapted to record images from a region surrounding the motor vehicle, and an electronic processing means for processing images recorded by said imaging device. The invention furthermore relates to a corresponding vision method.

Conventionally the orientation of vehicle-mounted cameras is calibrated at the manufacturer which is time consuming, difficult and costly. Furthermore, the orientation of a vehicle-mounted camera may change due to external factors like car load, external forces, thermal effects etc., which may affect the functioning of the vision system.

EP 1 681 577 A2 discloses a vision system where the optical flow in images recorded by an imaging means is determined and a vanishing point is calculated from the determined optical flow. If the position of the calculated vanishing point deviates from the position of a set point, the image position is adjusted accordingly. However, the determination of optical flow requires a sequence of images and is based on very complex mathematical approximation methods which are impractical to implement in motor vehicles where the processing capabilities are generally limited.

Vision systems wherein a vanishing point is calculated from line detection are disclosed for example in US 5 638 116, Yu-Ming Liang et al: "Video Stabilization for a Camcorder Mounted on a Moving Vehicle" IEEE Transactions on vehicular technology, vol. 53, no. 6, 1 November 2004, pages 1636-1648, WO 2009/027090 and EP 1 873 716 A1.

It is the object of the present invention to provide a computational effective vision system and method contributing to an overall cost reduction.

The invention solves this object with the features of the independent claims. The invention is based on the fact that in images taken from a moving motor vehicle usually essentially straight lines are present which relate to essentially parallel lines in the imaged scene. These are in particular lines relating to the course of the road, especially ground lines like road edges or lane markings. The lines can be determined using known image processing tools like an edge detection algorithm. This requires much less processing resources than the known determination of the optical flow. The convergence point of these lines denotes a central vanishing point which can provide a unambiguous reference point. In particular, position information of the convergence point provides a measure for the current orientation of the imaging device. Suitable position information of the convergence point may for example be the absolute position, a position relative to a set point, for example a central point or a corner of the detection area or the image, or an offset between the convergence point and a set point.

Knowing the current orientation of the imaging device allows for a calibration during movement of the vehicle in real time, which reduces, or even removes, the need for a calibration of the imaging means at the manufacturer. In this respect, the electronic processing means is preferably adapted to account for, in said image processing of said recorded images, said current orientation of said imaging device provided by said determination means.

The vision system comprises a confirmation means adapted to evaluate, on the basis of an independent source, a convergence point determination reliability. The confirmation means takes account of the fact that the convergence point determination may not be reliable under all conditions. For example the convergence point determination may not be reliable during turning left or right, driving along a curved road, driving along a road with steep slopes, etc.

The confirmation means uses information relating to the vehicle kinematics which preferably is evaluated over a certain period after recording of an image under consideration. Therefore, the independent source used by the confirmation means comprises a sensing arrangement measuring vehicle kinematics, in particular a yaw sensor, a pitch sensor and/or a vehicle speed sensor. In this case, the vision system preferably comprises a buffer for buffering information relating to each recorded image until the reliability of the corresponding offset determination has been evaluated, because at the time of recording an image only the future vehicle kinematics provide information whether the road ahead of the imaging device is essentially straight or not.

The confirmation means is preferably adapted to determine whether the road lying ahead of the imaging device was straight at the time of recording the image under consideration. This may preferably be done using signals from a yaw sensor and/or a sensor measuring a steering wheel angle in a certain period after recording of the image under consideration.

Other factors may be considered in the confirmation means. For example, images taken at low or zero vehicle speed may be not reliable since the orientation of the vehicle relative to the road may deviate from straight orientation, for example in case of manoeuvring into a parking space etc.

Alternatively or in addition to evaluating the vehicle kinematics, the confirmation means may use information about the type of road the vehicle is moving on. This may be determined preferably using signals from a properly equipped satellite navigation receiver which may be combined with information from a vehicle speed sensor. For example the confirmation means may determine the offset determination to be reliable only on certain types of roads like highways or main roads.

The confirmation means may additionally use information about the quality of the recorded image which may be extracted from the recorded images by image processing. For example the confirmation means may determine the offset determination to be reliable only in case the image quality exceeds a specified image quality threshold.

The confirmation means may act in different ways. In a preferred embodiment the confirmation means comprises a filter adapted to filter out convergence points with insufficient reliability. Alternatively, the confirmation means may for example set the straight line determination and/or convergence point determination inoperative in case unfavourable conditions are determined.

The position of a convergence point may be averaged over time before using it in determining the current orientation of the imaging device. In this respect it should be noted that a confirmation means is not strictly necessary for the invention because variations of a convergence point around a central convergence point tend to cancel out in the long run. However, the confirmation means can lead to a much faster and more robust convergence point determination.

A convergence point determined by the determination means may be used in different ways. Preferably the current orientation of said imaging device is accounted for in the image processing of the recorded images, for example by compensating for an offset between said convergence point and a set point, or providing a software calibration of the imaging device. In another embodiment a hardware re-adjustment of the orientation of the imaging means automatically may be performed in order to re-set an offset between said convergence point and a set point essentially to zero.

Since the straight lines to be detected are preferably lines on the ground like road edges or lane markings, the determination means preferably is adapted to disregard image lines essentially lying in an upper part of the image.

The determination means may use additional information from a vehicle load sensor which may lead to better results for different vehicle load cases.

In the following the invention shall be illustrated on the basis of preferred embodiments with reference to the accompanying drawings, wherein:
- Fig. 1: shows a schematic drawing of a vision system for a motor vehicle;
- Fig. 2: shows an exemplary image of a region in front of the motor vehicle; and
- Fig. 3: shows a schematic drawing of a vision system for a motor vehicle in another embodiment.

The vision system 10 is mounted in a motor vehicle and comprises an imaging means 11 for recording images of a region surrounding the motor vehicle, for example a region in front of the motor vehicle. Preferably the imaging means 11 comprises one or more optical and/or infrared imaging devices 12a, 12b, in particular cameras, where infrared covers near IR with wavelengths below 5 microns and/or far IR with wavelengths beyond 5 microns. Preferably the imaging means 11 comprises a plurality imaging devices 12a, 12b in particular forming a stereo imaging means 11; alternatively only one imaging device forming a mono imaging means could be used.

The imaging devices 12a, 12b are coupled to an electronic processing means 14 where processing of the images taken by the imaging devices 12a, 12b is carried out by means of a corresponding software. In particular, the processing means 14 comprises an object identifying means 15 adapted to identify and classify possible objects in front of the motor vehicle, such as pedestrians, bicyclists or large animals, a tracking means 16 adapted to track the position of object candidates in the recorded images identified by the object detection means 15 over time, and a decision means 17 adapted to activate or control vehicle safety means 18, 19, 20, ... depending on the result of the processing in the object detection and tracking means 15, 16. The vehicle safety means 18, 19, 20, --- may comprise a warning means 18 adapted to provide a collision warning to the driver by suitable optical, acoustical and/or haptical warning signals; display means 19 for displaying information relating to an identified object; one or more restraint systems 20 such as occupant airbags or safety belt tensioners, pedestrian airbags, hood lifters and the like, and/or dynamic vehicle control systems such as brakes.

The electronic processing means 14 is preferably programmed or programmable and may comprise a microprocessor or micro-controller. The electronic processing means 14 is preferably realised in an on-board electronic control unit (ECU) and may be connected to the imaging devices 12a, 12b via a separate cable or alternatively via a vehicle data bus. In another embodiment the ECU and one of the imaging devices 12a, 12b can be integrated into a single unit. All steps from imaging over image processing to activation or control of safety means 18, 19, 20, ... are performed automatically and continuously during driving in real time.

The processing means 14 comprises a determination means 30 which has access to the image data input to the processing means 14. The determination means 30 is programmed to determine, using image processing techniques, essentially straight lines in a recorded image 40. Alternatively, the straight line determination may also be performed together with the object detection in the object detection means 15.

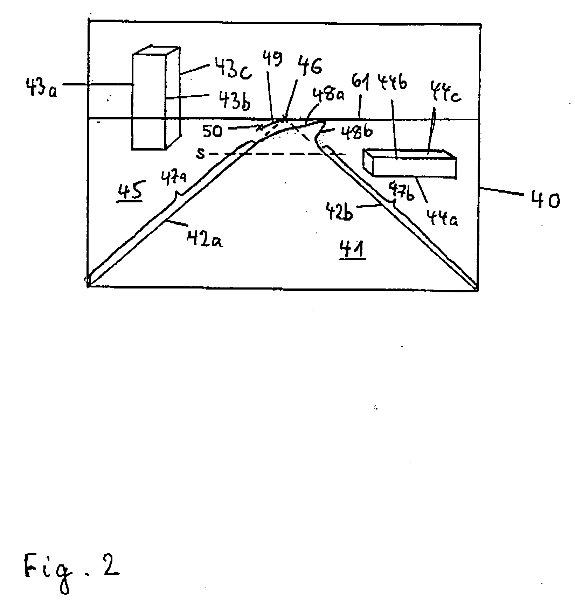

Fig. 2 schematically shows an example of an image taken from a vehicle driving on a road 41. The determination means 30 determines, for example using an edge detection algorithm like a Sobel operator algorithm, essentially straight lines 42a, 42b; 43a to 43c; 44a to 44c; ... in the image 40 corresponding the road edges 42a, 42b and objects 43, 44 in the scene such as buildings, bridges or the like.

In the next step the determination means 30 applies a filter to the determined straight lines 42a, 42b; 43a to 43c; 44a to 44c; ... in order to rule out the lines which are not suited for the offset determination. This line filter may apply different criteria to the detected lines. For example the lines 43a, 43b, 43c, ... of the building 43 may be disregarded since they are essentially lying in an upper part of the image 40 and are therefore not to be regarded as lines on the ground. The essentially horizontal lines 44a, 44b, 44c of the building 44 may be disregarded since essentially horizontal lines are generally not suited for the determination of a vanishing point. The short vertical lines of the building 44 may be disregarded because only lines with a length exceeding a certain minimum length are suited for offset determination.

The remaining straight lines passing the above described line filter, here the lines 42a, 42b corresponding to the road edges, can be considered as lines on the ground 45 which are parallel in reality and therefore converge in a convergence point 46 in the projection of the 3-dimensional scene in front of the vehicle onto the 2-dimensional image 40. The convergence point 46 is determined as the section point of the lines 42a, 42b. As is evident from Fig. 2, the lines 42a, 42b used for determination of the convergence point 46 do not have to be essentially straight over their whole length; only a straight portion 47a, 47b of sufficient length, expediently in the lower portion of the image, is required. The upper curved section 48a, 48b of the lines 42a, 42b corresponding to a curved road section lie beyond a certain threshold distance s and may therefore be disregarded.

The determination means 30 may then apply a filter to the determined convergence point 46 in order to rule out unsuited convergence points. For example a convergence point may be dismissed if it lies outside the image 40, or if the distance to the previously determined convergence point exceeds a certain threshold, taking into account that sudden large changes in the orientation of the imaging device 12a, 12b are not likely. If a horizon 61 is determined in the image 40, the converging point 46 may be required to lie on or close to the horizon 61.

Furthermore, the determination means 30 preferably confirms whether certain conditions necessary for an accurate convergence point determination are fulfilled. In particular, the determination means 30 preferably confirms that the road ahead of the vehicle is straight.

In one embodiment, the determination means 30 may evaluate whether an offset 49 of the convergence point 46 from a pre-determined set-point 50 is significant or not. For example the x-/y-distances between the convergence point 46 and the set point 50 in horizontal (x) and/or vertical (y) direction may be calculated and the absolute values of these differences may independently be compared to certain x- and y-thresholds. Alternatively the two-dimensional distance between the convergence point 46 and the set point 50 may be calculated and compared to a pre-determined threshold. The set point 50 may for example be the central point of the recorded image 40. The following steps may then only be carried out if the offset 49 is found to be significant; otherwise the offset 49 may be ignored.

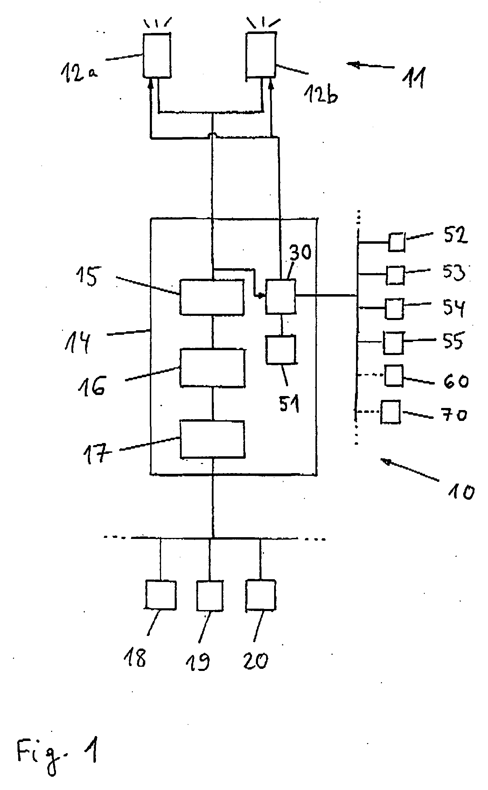

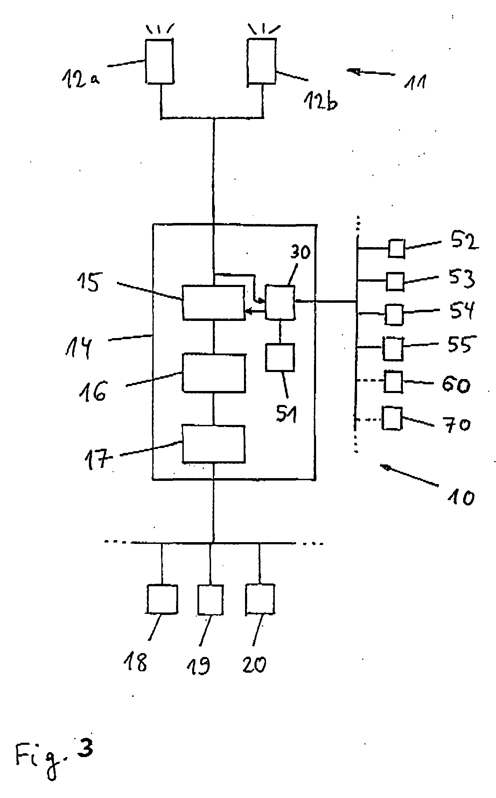

In the embodiment shown in Figs. 1 and 3 the confirmation means 30 uses vehicle kinematics information from one or more sensors 52 to 55 independent from the imaging means 11, in particular a vehicle yaw sensor 52, a vehicle pitch sensor 53 and/or a vehicle speed sensor 54 and/or a sensor 55 measuring the steering wheel angle. This information is measured over a certain period starting from the point where a particular image 40 under consideration is recorded until a point where the vehicle has reached the threshold distance s, see Fig. 2. The measuring period for each image may be specified in seconds or meters and may for example be at least 50 m, more preferably at least 100 m.

The reliability of the convergence point determination is confirmed if the signal from the yaw sensor 52 does not exceed a certain value over the whole measurement period, indicating that the road ahead of the vehicle was straight at the time a particular image 40 was taken. For the same purpose it may be proved, alternatively to or in combination with the signal from the yaw sensor 52, that the signal from the sensor 55 measuring the steering wheel angle does not exceed a certain value over the whole measurement period.

Since steep slopes may negatively affect a reliable offset determination as well, the reliability of the convergence point determination preferably is only confirmed if the signal from the pitch sensor 53, alternatively to or in combination with the signal from the yaw sensor 52, does not exceed a certain value over the whole measurement period.

Furthermore, since form example the vehicle may not be aligned parallel to the road at low speeds, the reliability of the convergence point determination may only be confirmed if the signal from the speed sensor 54, alternatively to or in combination with the signal from the yaw sensor 52, does exceed a certain value over the whole measurement period.

In the measurement period for a particular image 40 under consideration, the information on the position of the converging point 46 in that image 40 is expediently buffered in a buffer 51 connected to the determination means 30. If the reliability of the convergence point determination is finally confirmed, the determination means can fetch the information on the position of the converging point 46 from the buffer 51 and use it in a suitable manner, for example in order to compensate for the offset 49 of the convergence point 46 from the set point 50.

Alternatively to or in combination with vehicle kinematics information, the confirmation means 30 may use information indicating on which type of road the vehicle moves in particular from a suitably equipped satellite navigation receiver 60. The reliability of the convergence point determination may for example only be confirmed if the vehicle is found to move on high-speed roads like highways. The type of road the vehicle is moving on may also be determinable by information from the speed sensor 55.

In an embodiment where the confirmation means 30 does not use vehicle kinematics information, the buffer 51 may be dispensed with.

If the reliability of the convergence point determination is finally confirmed, the determination means 30, possibly after averaging a plurality of convergence point positions over time, preferably provides information relating to the position of the convergence point 46, in particular its absolute or relative x- and y-values or information derived from these, for example the offset 49, to other means enabling them to use it in one way or the other, as shall be explained below.

In the embodiment shown in Fig. 1 a hardware correction in order to compensate for the offset 49 is performed by re-adjusting the imaging device 12a, 12b for which the offset has been determined, i.e. adjusting the orientation of the imaging device 12a, 12b such that the converging point 46 falls together with the set point 50. In the example shown in Fig. 2 the imaging device 12a, 12b which has recorded the image 40 should be moved to the right and to the top.

In the preferred embodiment shown in Fig. 3 information relating to the position of the convergence point 46 is provided to the object identifying means 15 and/or the object tracking means 16 enabling them to account for the actual orientation of the imaging device 12a, 12b relating to the position of the convergence point 46. For example, the object identifying means 15 and/or the object tracking means 16 may perform a software compensation for the offset 49, or provide a software calibration of the imaging device 12a, 12b.

A combination of the embodiments according to Figures 1 and 3 is also possible. For example, in case of small offsets 49, information relating to the position of the convergence point 46 may be provided to the object identifying means 15 and/or the object tracking means 16 allowing for software calibration, whereas if the offset 49 becomes too large a hardware re-adjustment of the orientation of the imaging device 12a, 12b may be carried out.

The determination means 30 may use additional information from a vehicle load sensor 70 which may lead to better results for different vehicle load cases.

## Claims

1. A vision system (10) for a motor vehicle, comprising an imaging means (11) with at least one imaging device (12a, 12b) adapted to record images from a region surrounding the motor vehicle, and an electronic processing means (14) for processing said recorded images, wherein said vision system comprises a determination means (30) adapted to determine during driving, by using image processing performed in said electronic processing means (14), at least two essentially straight lines (42a, 42b) in the recorded image (40), to determine a convergence point (46) from said lines, and to determine a current orientation of said imaging device (12a, 12b) based on position information of said convergence point (46), wherein said vision system (10) comprises a confirmation means adapted to evaluate, on the basis of an independent source (52, 53, 54, 55, 60), a convergence point determination reliability, **characterized in that** said independent source used by said confirmation means comprises a yaw sensor (52), a pitch sensor (53) and/or a sensor (55) measuring the steering wheel angle.

2. The vision system as claimed in claim 1, wherein said electronic processing means (14) is adapted to account for, in said image processing of said recorded images, said current orientation of said imaging device (12a, 12b) provided by said determination means (30).

3. The vision system as claimed in claim 1 or 2, wherein said determination means (30) comprises said confirmation means.

4. The vision system as claimed in any one of the preceding claims, wherein said determination means (30) is adapted to determine whether the road lying ahead of the imaging device (12a, 12b) was straight at the time of recording the image.

5. The vision system as claimed in any one of the preceding claims, wherein said determination means (30) uses information from a sensing arrangement (52-54) measuring vehicle kinematics, in particular a yaw sensor (52), a pitch sensor (53) and/or a speed sensor (54).

6. The vision system as claimed in any one of the preceding claims, wherein said determination means (30) uses information from a sensor (55) measuring a steering wheel angle.

7. The vision system as claimed in any one of the preceding claims, comprising a buffer (51) for buffering information relating to each recorded image (40) until a reliability of the corresponding convergence point determination has been confirmed.

8. The vision system as claimed in any one of the preceding claims, wherein said determination means (30) uses information about the type of road the vehicle is moving on.

9. The vision system as claimed in any one of the preceding claims, wherein said determination means (30) uses information from a satellite navigation receiver (60).

10. The vision system as claimed in any one of the preceding claims, wherein said determination means (30) uses information about the quality of the recorded image.

11. The vision system as claimed in any one of the preceding claims, wherein said determination means (30) comprises a filter adapted to filter out unsuited straight lines or convergence points.

12. The vision system as claimed in any one of the preceding claims, wherein said determination means (30) is adapted to adjust the orientation of said imaging device (12a, 12b) in order to compensate for an offset (49) between said convergence point (46) and a set point (50).

13. The vision system as claimed in any one of the preceding claims, wherein said determination means (30) is adapted to disregard image lines essentially lying in an upper part of the image (40).

14. The vision system as claimed in any one of the preceding claims, wherein said determination means (30) uses information from a vehicle load sensor (70).

15. A vision method for a motor vehicle, comprising the steps of recording images from a region surrounding the motor vehicle by an imaging means (11) comprising at least one imaging device (12a, 12b), processing said recorded images, determining during driving, by using image processing, at least two essentially straight lines (42a, 42b) in the recorded image (40), determining a convergence point (46) from said lines, determining a current orientation of said imaging device (12a, 12b) based on position information of said convergence point (46), and evaluating, on the basis of an independent source (52, 53, 54, 55, 60), a convergence point determination reliability, **characterized in that** said independent source used by said confirmation means comprises a yaw sensor (52), a pitch sensor (53) and/or a sensor (55) measuring the steering wheel angle.

## Patentansprüche

1. Sichtsystem (10) für ein Kraftfahrzeug, umfassend ein Abbildungsmittel (11) mit mindestens einer Abbildungsvorrichtung (12a, 12b), die so ausgelegt ist, dass sie Bilder von einem das Kraftfahrzeug umgebenden Bereich aufnimmt, sowie ein elektronisches Verarbeitungsmittel (14) zum Verarbeiten der aufgenommenen Bilder, wobei das Sichtsystem ein Bestimmungsmittel (30) umfasst, das so ausgelegt ist, dass es während des Fahrens unter Verwendung von einer in dem elektronischen Verarbeitungsmittel (14) vorgenommenen Bildverarbeitung mindestens zwei im Wesentlichen gerade Linien (42a, 42b) in dem aufgenommenen Bild (40) bestimmt, aus den Linien einen Konvergenzpunkt (46) bestimmt und auf der Grundlage von Positionsangaben zu dem Konvergenzpunkt (46) eine aktuelle Ausrichtung der Abbildungsvorrichtung (12a, 12b) bestimmt, wobei das Sichtsystem (10) ein Bestätigungsmittel umfasst, das so ausgelegt ist, dass es auf der Grundlage einer unabhängigen Quelle (52, 53, 54, 55, 60) eine Zuverlässigkeit der Bestimmung des Konvergenzpunkts beurteilt, **dadurch gekennzeichnet, dass** die von dem Bestätigungsmittel verwendete unabhängige Quelle einen Giersensor (52), einen Neigungssensor (53) und/oder einen Sensor (55) umfasst, der den Lenkradwinkel misst.

2. Sichtsystem nach Anspruch 1, wobei das elektronische Verarbeitungsmittel (14) so ausgelegt ist, dass es, bei der Bildverarbeitung der aufgenommenen Bilder, die aktuelle Ausrichtung der Abbildungsvorrichtung (12a, 12b), die von dem Bestimmungsmittel (30) geliefert wird, berücksichtigt.

3. Sichtsystem nach Anspruch 1 oder 2, wobei das Bestimmungsmittel (30) das Bestätigungsmittel umfasst.

4. Sichtsystem nach einem der vorhergehenden Ansprüche, wobei das Bestimmungsmittel (30) so ausgelegt ist, dass es bestimmt, ob die vor der Abbildungsvorrichtung (12a, 12b) liegende Straße zum Zeitpunkt der Aufnahme des Bilds gerade war.

5. Sichtsystem nach einem der vorhergehenden Ansprüche, wobei das Bestimmungsmittel (30) Informationen von einer die Fahrzeugkinematik messenden Erfassungsanordnung (52 bis 54) nutzt, insbesondere einem Giersensor (52), einem Neigungssensor (53) und/oder einem Geschwindigkeitssensor (54).

6. Sichtsystem nach einem der vorhergehenden Ansprüche, wobei das Bestimmungsmittel (30) Informationen von einem Sensor (55) nutzt, der einen Lenkradwinkel misst.

7. Sichtsystem nach einem der vorhergehenden Ansprüche, das einen Puffer (51) zum Puffern von Informationen umfasst, die jedes aufgenommene Bild (40) betreffen, bis eine Zuverlässigkeit der entsprechenden Bestimmung des Konvergenzpunkts bestätigt worden ist.

8. Sichtsystem nach einem der vorhergehenden Ansprüche, wobei das Bestimmungsmittel (30) Informationen über die Art der Straße nutzt, auf der sich das Fahrzeug bewegt.

9. Sichtsystem nach einem der vorhergehenden Ansprüche, wobei das Bestimmungsmittel (30) Informationen von einem Satelliten-Navigationsempfänger (60) nutzt.

10. Sichtsystem nach einem der vorhergehenden Ansprüche, wobei das Bestimmungsmittel (30) Informationen über die Qualität des aufgenommenen Bilds nutzt.

11. Sichtsystem nach einem der vorhergehenden Ansprüche, wobei das Bestimmungsmittel (30) ein Filter umfasst, das so ausgelegt ist, dass es ungeeignete gerade Linien oder Konvergenzpunkte herausfiltert.

12. Sichtsystem nach einem der vorhergehenden Ansprüche, wobei das Bestimmungsmittel (30) so ausgelegt ist, dass es die Ausrichtung der Abbildungsvorrichtung (12a, 12b) anpasst, damit eine Abweichung (49) zwischen dem Konvergenzpunkt (46) und einem Sollwert (50) ausgeglichen wird.

13. Sichtsystem nach einem der vorhergehenden Ansprüche, wobei das Bestimmungsmittel (30) so ausgelegt ist, dass es Bildlinien, die im Wesentlichen in einem oberen Teil des Bilds (40) liegen, nicht berücksichtigt.

14. Sichtsystem nach einem der vorhergehenden Ansprüche, wobei das Bestimmungsmittel (30) Informationen von einem Fahrzeuglastsensor (70) nutzt.

15. Sichtverfahren für ein Kraftfahrzeug, das folgende Schritte umfasst: Aufnehmen von Bildern von einem das Kraftfahrzeug umgebenden Bereich mit einem Abbildungsmittel (11), das mindestens eine Abbildungsvorrichtung (12a, 12b) umfasst, Verarbeiten der aufgenommenen Bilder, Bestimmen von mindestens zwei im Wesentlichen geraden Linien (42a, 42b) in dem aufgenommenen Bild (40) während des Fahrens unter Verwendung einer Bildverarbeitung, Bestimmen eines Konvergenzpunkts (46) aus den Linien, Bestimmen einer aktuellen Ausrichtung der Abbildungsvorrichtung (12a, 12b) auf der Grundlage von Positionsangaben zu dem Konvergenzpunkt (46), und Beurteilen, auf der Grundlage einer unabhängigen Quelle (52, 53, 54, 55, 60), einer Zuverlässigkeit der Bestimmung des Konvergenzpunkts, **dadurch gekennzeichnet, dass** die von dem Bestätigungsmittel verwendete unabhängige Quelle einen Giersensor (52), einen Neigungssensor (53) und/oder einen Sensor (55) umfasst, der den Lenkradwinkel misst.

## Revendications

1. Système de vision (10) pour véhicule à moteur, comprenant un moyen d'imagerie (11) doté d'au moins un dispositif d'imagerie (12a, 12b) adapté pour enregistrer des images d'une zone entourant le véhicule à moteur, et un moyen de traitement électronique (14) destiné à traiter lesdites images enregistrées, ledit système de vision comprenant un moyen de détermination (30) adapté pour déterminer pendant la conduite au moins deux lignes sensiblement droites (42a, 42b) dans l'image enregistrée (40) au moyen d'un traitement d'image effectué dans ledit moyen de traitement électronique (14), pour déterminer un point de convergence (46) à partir desdites lignes, et pour déterminer une orientation actuelle dudit dispositif d'imagerie (12a, 12b) sur la base d'informations de position dudit point de convergence (46), ledit système de vision (10) comprenant un moyen de confirmation adapté pour évaluer, sur la base d'une source indépendante (52, 53, 54, 55, 60), une fiabilité de la détermination du point de convergence, **caractérisé en ce que** ladite source indépendante utilisée par ledit moyen de confirmation comprend un capteur de lacet (52), un capteur de tangage (53) et/ou un capteur (55) qui mesure l'angle du volant de direction.

2. Système de vision selon la revendication 1, dans lequel ledit moyen de traitement électronique (14) est adapté pour prendre en compte, dans ledit traitement d'image desdites images enregistrées, ladite orientation actuelle dudit dispositif d'imagerie (12a, 12b) fournie par ledit moyen de détermination (30).

3. Système de vision selon la revendication 1 ou 2, dans lequel ledit moyen de détermination (30) comprend ledit moyen de confirmation.

4. Système de vision selon l'une quelconque des revendications précédentes, dans lequel ledit moyen de détermination (30) est adapté pour déterminer si la route en avant du dispositif d'imagerie (12a, 12b) était droite au moment de l'enregistrement de l'image.

5. Système de vision selon l'une quelconque des revendications précédentes, dans lequel ledit moyen de détermination (30) utilise des informations d'un agencement de détection (52-54) qui mesure la cinématique du véhicule, en particulier un capteur de lacet (52), un capteur de tangage (53) et/ou un capteur de vitesse (54).

6. Système de vision selon l'une quelconque des revendications précédentes, dans lequel ledit moyen de détermination (30) utilise des informations d'un capteur (55) qui mesure un angle du volant de direction.

7. Système de vision selon l'une quelconque des revendications précédentes, comprenant une mémoire tampon (51) pour mettre en mémoire tampon des informations relatives à chaque image enregistrée (40) jusqu'à ce qu'une fiabilité de la détermination correspondante du point de convergence ait été confirmée.

8. Système de vision selon l'une quelconque des revendications précédentes, dans lequel ledit moyen de détermination (30) utilise des informations sur le type de route sur lequel le véhicule se déplace.

9. Système de vision selon l'une quelconque des revendications précédentes, dans lequel ledit moyen de détermination (30) utilise des informations d'un récepteur de navigation par satellite (60).

10. Système de vision selon l'une quelconque des revendications précédentes, dans lequel ledit moyen de détermination (30) utilise des informations sur la qualité de l'image enregistrée.

11. Système de vision selon l'une quelconque des revendications précédentes, dans lequel ledit moyen de détermination (30) comprend un filtre adapté pour éliminer par filtrage des lignes droites ou des points de convergence non adaptés.

12. Système de vision selon l'une quelconque des revendications précédentes, dans lequel ledit moyen de détermination (30) est adapté pour ajuster l'orientation dudit dispositif d'imagerie (12a, 12b) afin de compenser un décalage (49) entre ledit point de convergence (46) et un point de consigne (50).

13. Système de vision selon l'une quelconque des revendications précédentes, dans lequel ledit moyen de détermination (30) est adapté pour ignorer des lignes d'image situées essentiellement dans une partie supérieure de l'image (40).

14. Système de vision selon l'une quelconque des revendications précédentes, dans lequel ledit moyen de détermination (30) utilise des informations d'un capteur de charge du véhicule (70).

15. Procédé de vision pour véhicule à moteur, comprenant les étapes consistant à enregistrer des images d'une zone entourant le véhicule à moteur à l'aide d'un moyen d'imagerie (11) comprenant au moins un dispositif d'imagerie (12a, 12b), traiter lesdites images enregistrées, déterminer pendant la conduite au moins deux lignes sensiblement droites (42a, 42b) dans l'image enregistrée (40) au moyen d'un traitement d'image, déterminer un point de convergence (46) à partir desdites lignes, déterminer une orientation actuelle dudit dispositif d'imagerie (12a, 12b) sur la base d'informations de position dudit point de convergence (46), et évaluer, sur la base d'une source indépendante (52, 53, 54, 55, 60), une fiabilité de la détermination du point de convergence, **caractérisé en ce que** ladite source indépendante utilisée par ledit moyen de confirmation comprend un capteur de lacet (52), un capteur de tangage (53) et/ou un capteur (55) qui mesure l'angle du volant de direction.
